# EUROPEAN PATENT APPLICATION

(11) **EP 3 644 309 A1**
(43) Date of publication of application: **29.04.2020**
(21) Application number: 19191190.8
(22) Date of filing: 12.08.2019
(51) Int. Cl.: G10L 15/22, G10L 13/00, G10L 15/30, G06F 3/16

(54) **SYSTEM AND METHOD FOR INTEGRATED PRINTING OF VOICE ASSISTANT SEARCH RESULTS**

(30) Priority: 25.10.2018 US 201816170685
(71) Applicant: Toshiba Tec Kabushiki Kaisha, 141-8562 Tokyo (JP)
(72) Inventor: JENSEN, Gareth, Lake Forest, CA California 92630 (US)
(74) Representative: Bandpay & Greuter

(57) **Abstract**

A system and method for integrated printing of search results includes digital device having a processor and associated memory. Data is communicated with an associated document rendering device via a data interface. A microphone captures digitized speech to facilitate natural language processing of user input. The processor extracts commands from the digitized voice input and accesses a digital data record responsive to a verbal lookup command extracted from the digitized voice. The processor extracts a data record summary from the data record and completes a text-to-speech translation of the summary. The processor then reads the resultant text through a speaker. The processor then commences a print of the digital data record responsive to a verbal print command extracted from the digitized voice input.

## Description

### TECHNICAL FIELD

This application relates generally to assisted printing of search query results. The application relates more particularly to printing of detailed information chosen based on an initial verbal summary of a search result completed in response to a verbal query using a digital assistant.

### BACKGROUND

Document processing devices include printers, copiers, scanners and e-mail gateways. More recently, devices employing two or more of these functions are found in office environments. These devices are referred to as multifunction peripherals (MFPs) or multifunction devices (MFDs). As used herein, MFPs are understood to comprise printers, alone or in combination with other of the afore-noted functions. It is further understood that any suitable document processing device can be used.

Digital devices today are frequently equipped with artificial intelligence assistants that can receive and process natural language inquiries or instructions and respond verbally or perform an action. Today, available assistants include Google Assistant, Apple's Siri, Samsung's Bixby, Amazon's Alexa and Microsoft's Cortana. A typical assistant will be always running and listening for a start phrase to activate, such as "okay Google," "hey Cortana," or "hey Siri." This wake up phrase is followed by a verbal instruction, such as "send an e-mail message" or a query which will commence a web search, such as "what's today's weather forecast?" Some experts are integrated into automation systems, such as home automation, and can act on instructions such as "turn on the light" or "tune to satellite channel 15."

Assistants are particularly popular on portable data devices such as tablet computers and smartphones as entry of instructions or text on a smaller touchscreen can be difficult. Verbal instructions or queries are particularly useful while a person and their device are in motion, such as while driving or walking. When an assistant is engaged, a person may speak an instruction such as, "any new text messages?" and their device can read any new messages aloud. A user can simply dictate a reply text, followed by a send command, to respond to their incoming text.

Assistants are useful to verbally initiate searches, such as worldwide web searches. Many web pages today have lead sections, also known as the lead or introduction, which may appear at the top of a web page. Frequently, search results are returned by an information repository, such as Wikipedia. Wikipedia's Manual of Style sets forth guidelines for a lead section. In instance where a lead section is present, an assistant may read the contents of a lead section aloud as an immediate response to a user's search inquiry.

### SUMMARY OF INVENTION

To solve such problem, there is provided a system comprising:
a data interface configured for data communication with an associated document rendering device;
a microphone;
a speaker; and
a processor and associated memory,
the processor configured to facilitate natural language processing of digitized voice input received via the microphone,
   the processor further configured to facilitate extraction of commands from the digitized voice input,
the processor further configured to access a digital data record responsive to a verbal lookup command extracted from the digitized voice input,
   the processor further configured to extract a summary of content of the digital data record,
the processor further configured commence a text-to-speech translation of the extracted summary,
the processor further configured generate an audible output on the speaker corresponding to the text-to-speech translation, and
the processor further configured to commence a print of the accessed digital data responsive to a verbal print command extracted from the digitized voice input.

Preferably, the processor is further configured to dispatch the accessed digital data to an associated printer responsive to the verbal print command.

Preferably still, the processor is further configured to send a print command to the associated printer to commence a printout of the accessed digital data.

Preferably yet, the verbal lookup command is comprised of a web search.

Suitably, the accessed digital data is comprised of character data extracted from a result of the web search.

Suitably still, the processor is further configured to initiate a text-to-speech translation of the character data.

Suitably yet, the processor is further configured to send the print command to the associated printer identified from the digitized voice input.

Typically, the processor is further configured to send the print command to a pre-identified, cloud-based printing service.

The invention also relates to a method comprising:
digitizing verbal input received via a microphone;
facilitating natural language processing of digitized voice input received via the microphone;
extracting commands from the digitized voice input;
accessing a digital data record responsive to a verbal lookup command extracted from the digitized voice input;
extracting a summary of content of the digital data record;
performing a text-to-speech translation of the summary;
outputting verbal information from the text-to-speech translation; and
commencing a print of accessed digital data responsive to a verbal print command extracted from the digitized voice input.

Preferably, the method further comprises dispatching the accessed digital data to an associated printer responsive to the verbal print command.

Preferably still, the method further comprises sending a print command to the associated printer to commence a printout of the accessed digital data.

Preferably yet, the verbal lookup command is comprised of a web search.

Suitably, the accessed digital data is comprised of character data extracted from a result of the web search.

Suitably still, the method further comprises initiating a text-to-speech translation of the character data.

Suitably yet, the method further comprises sending the print command to the associated printer identified from the digitized voice input.

Typically, the method further comprises sending the print command to a pre-identified, cloud-based printing service.

The invention also concerns a system comprising:
a processor and associated memory;
a network interface;
a voice input configured to generate digitized speech; and
   an audio output,
wherein the processor is configured to send the digitized speech to an associated server via the network interface;
wherein the network interface is configured to receive instructions corresponding to the digitized speech from the associated server via the network interface;
wherein the processor is further configured to access at least one data record responsive to a received query instruction;
wherein the processor is further configured to commence a text-to-speech conversion of character data disposed in the at least one data record;
wherein the processor is further configured to generate verbal output in accordance with the text-to-speech conversion; and
wherein the processor is further configured to initiate a print of the at least one data record in accordance with a verbal print command received by the voice input.

Preferably, the processor is further configured to communicate the at least one data record to a cloud printing service via the network interface in accordance with the received verbal print command.

Preferably still, the network interface is further configured to receive a print confirmation from the cloud printing service.

Preferably yet, the processor is further configured to generate a print confirmation prompt via the audio output.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is an example embodiment of a system for printing of search results form an online search performed by a user on a smart device;
FIG.2 is an example embodiment of a document rendering device;
FIG.3 is an example embodiment of a digital device;
FIG.4 is a flowchart of an example embodiment of a system for assisted printing of enhanced query results from interaction with a digital assistant; and
FIG.5 is an example embodiment of a voice assisted query and print system.

### DETAILED DESCRIPTION

The systems and methods disclosed herein are described in detail by way of examples and with reference to the figures. It will be appreciated that modifications to disclosed and described examples, arrangements, configurations, components, elements, apparatuses, devices, methods, systems, etc. can suitably be made and may be desired for a specific application. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such.

In accordance with an example embodiment of the subject application, a system and method for integrated printing of search results includes a digital device having a processor and associated memory. Data is communicated with an associated document rendering device via a data interface. A microphone digitizes speech to facilitate natural language processing of user voice input. The processor extracts commands from the digitized voice input and accesses a digital data record responsive to a verbal lookup command extracted from the digitized voice input. The processor extracts a data record summary from the data record and completes a text-to-speech translation of the summary. The processor then reads the resultant text through a speaker. The processor then commences a print of the digital data record responsive to a verbal print command extracted from the digitized voice input.

While reading of a lead section may be sufficient to a user's verbal search inquiry to an assistant, a user may desire more detail, such as by viewing the entire article. However, viewing the entire article may not be possible, such as when a user is driving. In these instances, the user will have to recall the search at a later time in order to view the complete article. The user may be unable to recall their particular search or reacquire the same content the next time they perform a search.

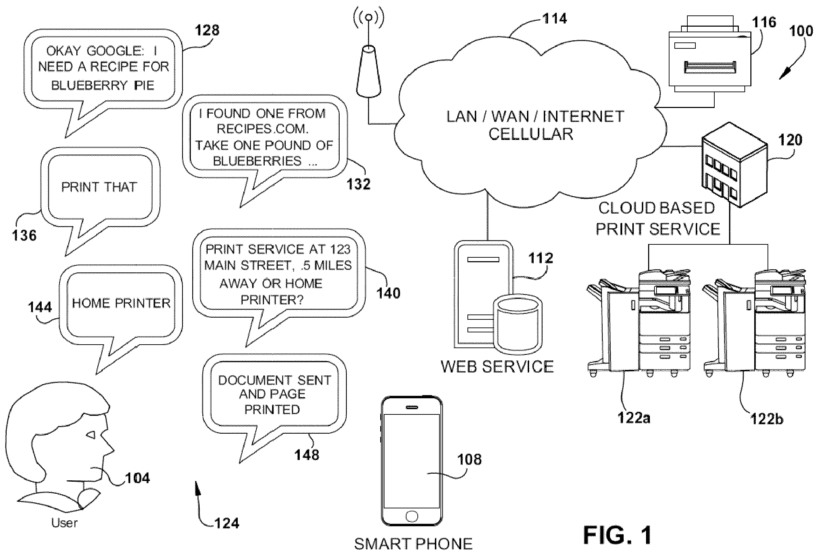

FIG.1 illustrates an example embodiment of a system 100 for printing of search results from an online search performed by a user on a smart device. In the illustrated example, user 104 has a portable data device, such as a smartphone or tablet. In the example, user 104 has a smartphone 108 which is running a digital assistant such as set forth above. Natural language processing can require considerable computing power, likely more than will be readily available form a device such as smartphone 108. The digital assistant may capture a user's digitized speech and send it to a web service 112 for decoding embedded phrases followed by execution of embedded instructions. Communication between smartphone 108 and web service 112 is suitably accomplished through cloud 114 which is suitably any wired or wireless data communication mechanism or combination thereof. These include local area networks (LANs), wide area networks (WANs), which may comprise the global Internet, or cellular data communication.

As noted above, a digital assistant may be used to initiate a verbal query, such one that may result in one or more web pages or web page links being returned. A best fit page result may be determined by the digital assistance and a summary may be read to the user. The summary may be a first few lines of a page or the lead section of page should one exist. This verbal reply may denote to the user a page from which they could obtain more complete information. In such an instance, the user would need to recall their search query when they are in a better situation for hands on device operation, which may require them to stop driving. They may forget to follow up and a promising lead may be lost. They may also be unable to re-create their prior query and thus fail to relocate the promising search results. Even if a query could be accurately recalled and rerun, the page may be updated or the search engine may change results. Even if the search result could be found again, the user would need to do so at a device with printer access in order to make a hard copy printout of the more complete results.

In accordance with the example embodiment of FIG.1, the system addresses afore-noted problems. The system allows a user to make a natural language query to their digital assistant on their device, and have it processed to read a lead or summary from a search result page. If the user wishes to view a more complete rendering of their search results, they need only reply with a print instruction, or sequence of instructions, to immediately commence a hard copy printout of the more complete results corresponding to the verbalized summary. A suitable printer may be associated with their portable data device, such as pre-identified or user selected printer associated with their home computer, such as printer 116. The user may also engage a default or selected third party print service 120 to print their document. Print service 120 is suitably comprised of one or more document rendering devices, such as MFPs 122a and 122b in the illustrated example.

In the illustrated embodiment of FIG. 1, user 104 suitably engages in a natural language dialog 124 with their digital assistant through their smartphone 108. Some or all of the subject dialog may also be completed with physical device interaction, such as via a touchscreen interface. The user commences a query 128, which results in a summary search response 132, which is a recipe in the example. User 104 replies with a print instruction 136, and the assistant locates and identifies one or more candidate print options at 140, in this instance coupled with distance and location of a nearby print service. The user makes their printer choice at 144 to commence a printout, and the assistant provides confirmation at 148.

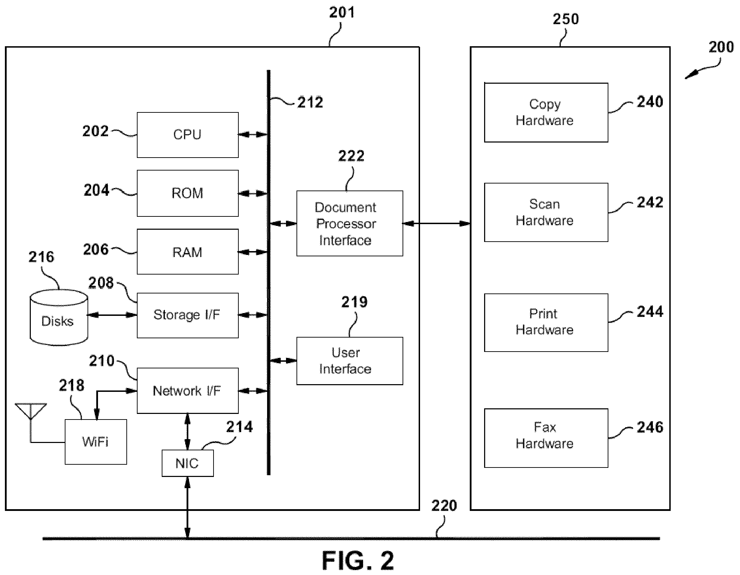

Turning now to FIG.2 illustrated is an example embodiment of a MFP device comprised of a document rendering system 200 suitably comprised within an MFP, such as with MFPs 122a and 122b of FIG.1. Included in intelligent controller 201 are one or more processors, such as that illustrated by processor 202. Each processor is suitably associated with non-volatile memory, such as ROM 204, and random access memory (RAM) 206, via a data bus 212.

Processor 202 is also in data communication with a storage interface 208 for reading or writing to a storage 216, suitably comprised of a hard disk, optical disk, solid-state disk, cloud-based storage, or any other suitable data storage as will be appreciated by one of ordinary skill in the art.

Processor 202 is also in data communication with a network interface 210 which provides an interface to a network interface controller (NIC) 214, which in turn provides a data path to any suitable wired or physical network connection 220, or to a wireless data connection via wireless network interface 218. Example wireless connections include cellular, Wi-Fi, Bluetooth, NFC, wireless universal serial bus (wireless USB), satellite, and the like. Example wired interfaces include Ethernet, USB, IEEE 1394 (FireWire), Lightning, telephone line, or the like. Processor 202 is also in data communication with one or more sensors which provide data relative to a state of the device or associated surroundings, such as device temperature, ambient temperature, humidity, device movement and the like.

Processor 202 can also be in data communication with any suitable user input/output (I/O) interface 219 which provides data communication with user peripherals, such as displays, keyboards, mice, track balls, touch screens, or the like. Hardware monitors suitably provides device event data, working in concert with suitable monitoring systems. By way of further example, monitoring systems may include page counters, sensor output, such as consumable level sensors, temperature sensors, power quality sensors, device error sensors, door open sensors, and the like. Data is suitably stored in one or more device logs, such as in storage 216 of FIG.2.

Also in data communication with data bus 212 is a document processor interface 222 suitable for data communication with MFP functional units 250. In the illustrated example, these units include copy hardware 240, scan hardware 242, print hardware 244 and fax hardware 246 which together comprise MFP functional hardware 250. It will be understood that functional units are suitably comprised of intelligent units, including any suitable hardware or software platform.

Intelligent controller 201 is suitably provided with an embedded web server system for device configuration and administration. A suitable web interface is comprised of TOPACCESS Controller (sometimes referred to in the subject illustrations as "TA"), available from Toshiba TEC Corporation.

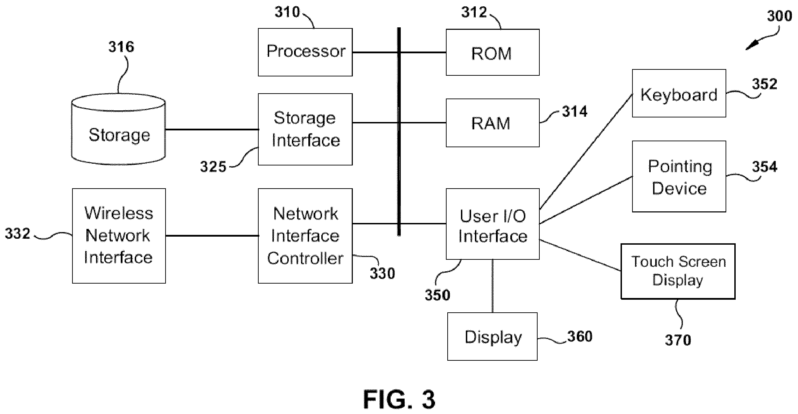

Turning now to FIG.3, illustrated is an example embodiment of a suitable digital device 300 such a smartphone 116. Included are one or more processors, such as that illustrated by processor 310. Each processor is suitably associated with non-volatile memory, such as read only memory (ROM) 312 and random access memory (RAM) 314, via a data bus.

Processor 310 is also in data communication with a storage interface 325 for reading or writing to a data storage system 316, suitably comprised of a hard disk, optical disk, solid-state disk, or any other suitable data storage as will be appreciated by one of ordinary skill in the art.

Processor 310 is also in data communication with a network interface controller (NIC) 330, which provides a data path to any suitable wired or physical network connection via physical network interface 334, or to any suitable wireless data connection via wireless interface 332, such as one or more of the networks detailed above. The system suitably uses location based services.

Processor 304 is also in data communication with a user input/output (I/O) interface 350 which provides data communication with user peripherals, such as display 360, as well as keyboards 352, mice, track balls, or other pointing devices 354, touch screen 370, or the like. It will be understood that functional units are suitably comprised of intelligent units, including any suitable hardware or software platform.

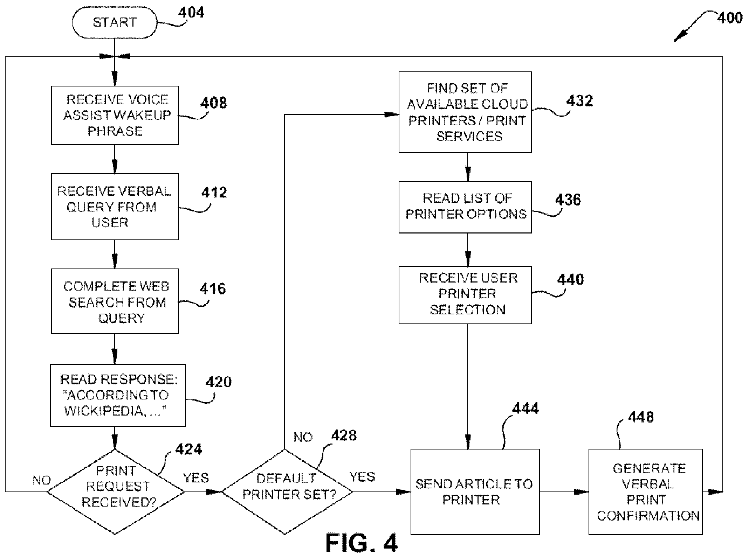

FIG.4 is a flowchart 400 of an example embodiment for assisted printing of enhanced query results from interaction with a digital assistant. The process commences at block 404 wherein a digital assistant is running on a user's device. Next, at block 408, the assistant is awakened by speaking its associated wakeup phrase. This phrase is followed by a verbal query at block 412 and an associated search is completed at block 416. A summary response from a web page deemed a best query result is read at block 420. If no verbal print request is received at block 424, the system suitably returns to block 408 to await the next wakeup phrase.

If a print request is received at block 424, such as by the user stating "print" after the summary has been read, then at block 428 the system determines if a default printer has been configured. If a default printer is configured at block 428, then the complete article, page or other search results are sent to the default printer at block 444. If not, then a list of one or more print options is determined at block 432 and suitably read or displayed for the user at block 436. The user's selection is received at block 440, and the complete article, page or other search results are sent to the selected printer or printers at block 444. A user prompt, such as a verbal confirmation, is given at block 448, to confirm that the print request has been sent.

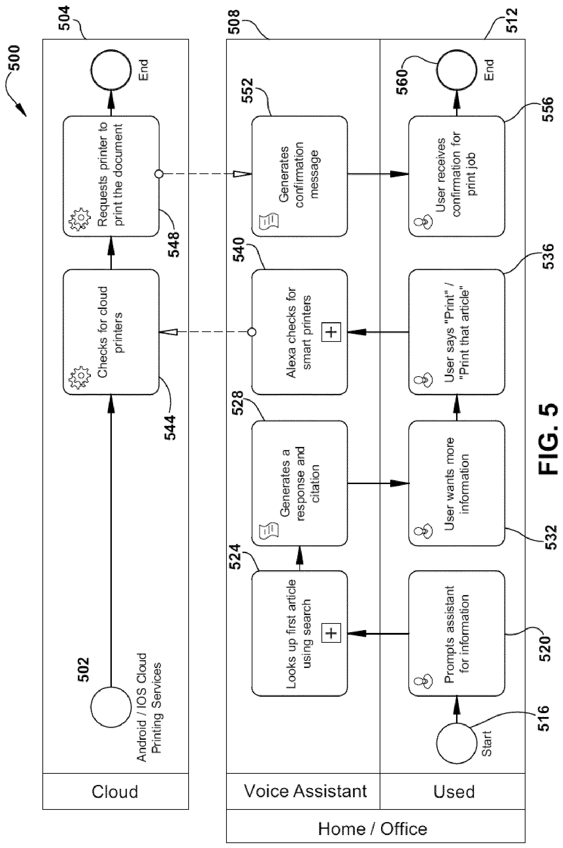

FIG.5 illustrates an example embodiment of a voice assisted query and print system 500 that includes cloud actions 504, voice assistant actions 508 and user actions 512. In this example, a suitable voice assistant is Alexa, although any suitable assistant can be used. A cloud printing service is suitably activated at block 502. A user commences their query at block 516 and prompts an assistant running on their digital device for information at block 520. The voice assistant enters a search, such as a web search, and a lead article is returned from the search at block 524. The assistant generates a response and citation of the first article at block 528, and the user indicates that they want additional information at block 532, and directs a print of the returned article at block 536. Alexa then checks for smart printers at block 540 and/or cloud printers at block 544. The article is set for printing at block 548 and the Alexa generates a print confirmation at block 552. The user receives confirmation of a printout at block 556 and the process ends at block 560, suitably recommencing when another search is initiated.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A system comprising:
a data interface configured for data communication with an associated document rendering device;
a microphone;
a speaker; and
a processor and associated memory,
the processor configured to facilitate natural language processing of digitized voice input received via the microphone,
the processor further configured to facilitate extraction of commands from the digitized voice input,
the processor further configured to access a digital data record responsive to a verbal lookup command extracted from the digitized voice input,
the processor further configured to extract a summary of content of the digital data record,
the processor further configured commence a text-to-speech translation of the extracted summary,
the processor further configured generate an audible output on the speaker corresponding to the text-to-speech translation, and
the processor further configured to commence a print of the accessed digital data responsive to a verbal print command extracted from the digitized voice input.

2. The system according to claim 1, wherein the processor is further configured to dispatch the accessed digital data to an associated printer responsive to the verbal print command.

3. The system according to claim 2, wherein the processor is further configured to send a print command to the associated printer to commence a printout of the accessed digital data.

4. The system according to any one of claims 1 to 3, wherein the verbal lookup command is comprised of a web search.

5. The system according to claim 4, wherein the accessed digital data is comprised of character data extracted from a result of the web search.

6. The system according to claim 5, wherein the processor is further configured to initiate a text-to-speech translation of the character data.

7. The system according to claim 3, wherein the processor is further configured to send the print command to the associated printer identified from the digitized voice input.

8. The system according to any one of claims 1 to 7, wherein the processor is further configured to send the print command to a pre-identified, cloud-based printing service.

9. A method comprising:
digitizing verbal input received via a microphone;
facilitating natural language processing of digitized voice input received via the microphone;
extracting commands from the digitized voice input;
accessing a digital data record responsive to a verbal lookup command extracted from the digitized voice input;
extracting a summary of content of the digital data record;
performing a text-to-speech translation of the summary;
outputting verbal information from the text-to-speech translation; and
commencing a print of accessed digital data responsive to a verbal print command extracted from the digitized voice input.

10. The method according to claim 9, further comprising dispatching the accessed digital data to an associated printer responsive to the verbal print command.

11. The method according to claim 10, further comprising sending a print command to the associated printer to commence a printout of the accessed digital data.

12. The method according to claim 11, wherein the verbal lookup command is comprised of a web search.

13. The method according to claim 12, wherein the accessed digital data is comprised of character data extracted from a result of the web search.

14. The method according to claim 13, further comprising initiating a text-to-speech translation of the character data.

15. A system comprising:
a processor and associated memory;
a network interface;
a voice input configured to generate digitized speech; and
an audio output,
wherein the processor is configured to send the digitized speech to an associated server via the network interface;
wherein the network interface is configured to receive instructions corresponding to the digitized speech from the associated server via the network interface;
wherein the processor is further configured to access at least one data record responsive to a received query instruction;
wherein the processor is further configured to commence a text-to-speech conversion of character data disposed in the at least one data record;
wherein the processor is further configured to generate verbal output in accordance with the text-to-speech conversion; and
wherein the processor is further configured to initiate a print of the at least one data record in accordance with a verbal print command received by the voice input.
